# EUROPEAN PATENT SPECIFICATION

(11) **EP 2 833 711 B1**
(45) Date of publication and mention of the grant of the patent: **29.07.2020**
(21) Application number: 13768224.1
(22) Date of filing: 27.03.2013
(51) Int. Cl.: A01G 23/083, G01B 3/12

(54) **A HARVESTER HEAD AND A MEASURING WHEEL APPARATUS FOR A HARVESTER HEAD**
ERNTEVORSATZ UND MESSRADVORRICHTUNG EINES ERNTEVORSATZES
TÊTE D'ABATTAGE-ÉBRANCHAGE ET APPAREIL DE ROUE DE MESURE DESTINÉ À UNE TÊTE D'ABATTAGE-ÉBRANCHAGE

(30) Priority: 29.03.2012 FI 20125359
(43) Date of publication of application: 11.02.2015
(73) Proprietor: Waratah OM Oy, 80101 Joensuu (FI)
(72) Inventor: KESKINEN, Juho, 33340 Tampere (FI); HANNE, Kari, 36200 Kangasala (FI); HANNONEN, Mika, 80260 Joensuu (FI); PYYKKÖ, Heikki, 33340 Tampere (FI)
(74) Representative: Berggren Oy, Tampere
(86) International application number: PCT/FI2013/050343
(87) International publication number: WO 2013/144450

(56) References cited:
- EP-A1- 2 074 881
- WO-A1-80/01865
- WO-A1-2005/023498
- WO-A1-2005/023498
- US-A1- 2008 128 051
- US-A1- 2008 128 051
- US-A1- 2010 313 999
- US-A1- 2010 313 999

## Description

### Field of the invention

The invention relates to a harvester head. The invention also relates to a measuring wheel apparatus which is usable in a harvester head.

### Background of the invention

For harvesting, there are all-terrain mobile forest working machines, such as harvesters. The forest working machine comprises apparatuses for processing tree trunks, for example a felling head which is intended for cutting and felling a standing tree trunk only, wherein it is a so-called felling head, or a harvester head which is intended for cutting, felling, delimbing, and sawing a standing tree trunk into pieces of desired length. The sawn trunks are collected by another known all-terrain mobile forest working machine, such as a forwarder. The forwarder comprises a grapple mounted on the end of a boom assembly, and the trunks are transported in its load space. Forest working machines are also known, in which the functions of the harvester and the forwarder are combined.

The harvester head is normally mounted by joints at the end of the boom assembly of a forest machine. The working machine is particularly a harvester which moves on a terrain by means of wheels or a crawler. The harvester head comprises the necessary actuators, normally hydraulic cylinders and hydraulic motors, for controlling the position and the different functions of the harvester head.

The harvester head normally comprises delimbing devices which are pivotable in relation to the frame structure. The delimbing devices are normally placed as a pair on different sides of the tree trunk. The delimbing devices comprise delimbing blades for cutting off the branches while the trunk is being supported and fed through the apparatus. The feed members normally comprise a feed roll or a drive wheel which is pressed against the tree trunk and pulls it past the delimbing devices and through the apparatus. The harvester head is also provided with cutting devices, such as a chain saw, for performing the cutting of the tree trunk for felling, and sawing it into pieces of fixed length.

In view of various wood species, the harvester heads are particularly used for the delimbing and cutting of pine and spruce, but also for the delimbing and cutting of hardwood and different eucalyptus species. Some harvester heads are also capable of debarking the trunk of the eucalyptus species while it is being processed at the harvester head. Harvester heads which are merely intended for debarking are also used, wherein they do not comprise the above-mentioned cutting devices.

The feed member of a debarking harvester head may be equipped with a cutting pattern for cutting and detaching the bark from the tree trunk. During the feeding, the tree trunk can also be rotated around its longitudinal axis to detach the bark more efficiently from all sides of the tree trunk. The delimbing devices remove bark from the tree trunk when they are pressed around the tree trunk and the trunk is moved past them.

When the trunk is moved through the harvester head, its length is simultaneously measured. One possibility to measure the length of the trunk is to use a feed wheel rotated by a motor as the feed member. The rotation of the feed wheel is monitored by one or more sensors, and the length of the tree trunk can be concluded by the control apparatus of the harvester head or of the forest machine on the basis of a measuring signal given by the sensor. Normally, the feed wheel is placed against the trunk and rotates with the same, but a situation may also occur in which the feed wheel glides along the trunk, or it slips or rotates without moving the trunk. This will result in inaccuracies in the measurement of length.

The length of the tree trunk can also be measured by means of a measuring device. Document WO 2010/143076 A2 discloses an embodiment of a measuring device which comprises a measuring wheel coupled in an articulated manner to the frame of a harvester head and is kept placed against the trunk. The measuring wheel follows the contour of the trunk, and the trunk rotates the measuring wheel which comprises a sensor giving a measuring signal. At the same time, the measuring wheel acts as a device for performing or assisting in debarking, preferably both cutting and removing bark. Furthermore, the harvester head comprises a feed wheel supporting the trunk. The harvester head can also be equipped with a separate supporting roller, along which the trunk moves and which keeps the trunk off the frame of the harvester head.

The measuring device has to bear loads and it has to be robust. Moreover, the measuring wheel has to follow the surface of the trunk in a reliable manner, for obtaining accurate measurement results.

Such a measurement wheel apparatus which is used to measure the length of a tree trunk during processing in the harvester head is described also in document EP 2 074 881 A1. In the measurement apparatus of this document the measurement roller is firmly pressed against the wood such that the gripped wood is prevented from rattling inside the claws. US2008/0128051 and US2010/0313999 A1 disclose alternative measuring wheels.

### Summary of the invention

The measuring wheel apparatus according to the invention is presented in claim 1. The harvester head according to the invention is presented in claim 6.

The present solution relates to a harvester head comprising at least a frame structure, feed members which are provided in the frame structure and which feed the trunk in the longitudinal direction through the harvester head, and a measuring wheel apparatus connected to the frame structure in a swinging manner. The apparatus comprises a measuring wheel configured to roll along a tree trunk when the trunk is fed through the harvester head, and a power device configured to swivel the measuring wheel apparatus and to keep the measuring wheel pressed against the trunk.

The measuring wheel is configured to remain in an elevated position in relation to the frame structure of the harvester head, wherein the measuring wheel also has a supporting position to support the trunk and to prevent the placement of the trunk against the frame structure. Furthermore the measuring wheel is equipped with devices for debarking the tree trunk.

According to the presented solution, the measuring wheel also acts as a so-called supporting roller in said supporting position. The supporting roller gives the required supporting force to prevent the trunk from being placed against the frame structure of the harvester head and from sliding along the frame structure. The sliding is prevented, and the trunk rolls along the supporting roller, so that the feeding force of the feed members can be reduced, compared with sliding.

As the supporting roller function is integrated in the measuring wheel function, the use of a separate supporting roller is avoided, and the structure of the harvester head can be made compact.

The measuring wheel apparatus according to the invention comprises stopping member for stopping the swinging motion of the measuring wheel apparatus at the moment when the measuring wheel assumes a supporting position. At other moments, a power device controls the swinging motion in an attempt to press the measuring wheel against the trunk.

In the presented solution, the measuring wheel also swings and follows the trunk and its contour. The measuring wheel tends to be pushed against the trunk. However, the measuring wheel is stopped in said supporting position, in which it acts as a supporting roller, when the force of the trunk presses the measuring wheel towards the frame structure. Thus, the measuring wheel does not enter inside the frame structure, but it keeps the trunk off the frame structure.

It is possible to perform debarking with the harvester head, wherein the frame structure of the harvester head can be provided with planar surfaces with devices for cutting and removing bark, for example blades or teeth. The trunk is in contact with these debarking devices, and when the trunk moves, the bark is cut off and detached. In the debarking harvester head, the feed members may also be equipped with devices for debarking the trunk.

The measuring wheel is also equipped with devices for debarking the trunk. Thus, the measuring wheel is provided with a debarking function in addition to the supporting function, wherein debarking can also be performed in the compact device, and the number of devices can be reduced.

The measuring wheel cuts the bark simultaneously when the measuring wheel rolls along the trunk. The measuring wheel removes bark simultaneously when the measuring wheel rolls along the trunk. Various teeth or blades of the measuring wheel, or their patterns, can be used to effect removal or cutting of the bark, or both of them. The dimensions, shapes and orientations of the teeth and the blades are used to have a desired effect on the bark.

The harvester head may also be provided with grapple members which are coupled to the frame structure in an articulated manner and embrace the trunk. The function of the grapple members may be delimbing or debarking, or both.

According to an example, the power device is a spring or a cylinder. The power device may be a device which provides a force sufficient to press the measuring wheel against the trunk and allows a swinging motion of the measuring wheel apparatus.

A harvester head according to the solution may be of a type that performs cutting and felling of an upright growing tree trunk and also performs either delimbing or debarking of the trunk, or both. The harvester head may be of a type that performs either delimbing or debarking of a ready felled trunk, or both.

The present solution relates to a measuring wheel apparatus which is applicable in a harvester head, comprises at least a frame and a measuring wheel coupled to the frame in a rotating manner, and is configured to be placed against a tree trunk when the measuring wheel apparatus is coupled to the harvester head and the trunk is fed through the harvester head. The measuring wheel apparatus also comprises a frame joint, by means of which the frame can be connected to the harvester head in a swinging manner, and a power device configured to swivel the swinging wheel apparatus and to keep the measuring wheel pressed against the trunk.

The measuring wheel also has a supporting position which supports the trunk, and the measuring wheel apparatus comprises a stopping member configured to stop the swinging motion of the measuring wheel apparatus when the measuring wheel assumes said supporting position. In said supporting position, the measuring wheel simultaneously acts as a so-called supporting roller.

The stopping member stops the swinging motion of the measuring wheel apparatus at the moment when the measuring wheel assumes said supporting position. At other moments, the power device controls the swinging motion in an attempt to press the measuring wheel against the trunk. The power device springs and follows the contour of the trunk.

The stopping member is, for example, a peg, a projection or a stopper fastened to the measuring wheel apparatus, or another part of the measuring wheel apparatus.

In an example, the frame constitutes a swinging fork, comprising two frame protrusions, between which the measuring wheel is placed and to which the measuring wheel is connected. As the measuring wheel is supported on both sides, a more robust structure is achieved than in the state of art.

Thanks to its strong structure, the measuring wheel apparatus of the presented type is suitable for use in various types of harvester heads.

### Brief description of the drawings

To understand the presented solution, in the description reference will be made to the appended drawings which show some examples according to the solution.
- Fig. 1: shows a harvester, to which it is possible to connect a harvester head according to the presented solution, in which it is also possible to apply a measuring wheel apparatus according to the presented solution.
- Fig. 2: shows a harvester head according to the presented solution, in which it is possible to apply a measuring wheel apparatus according to the presented solution.
- Fig. 3: shows a measuring wheel apparatus according to the presented solution.
- Fig. 4: shows the frame of the measuring wheel apparatus of Fig. 3, which has the shape of a fork according to an example.
- Fig. 5: shows a side view of the measuring wheel of a measuring wheel apparatus, fitted in the frame structure of a harvester head and placed in a position which is a so-called supporting position.

### More detailed description of embodiments of the invention

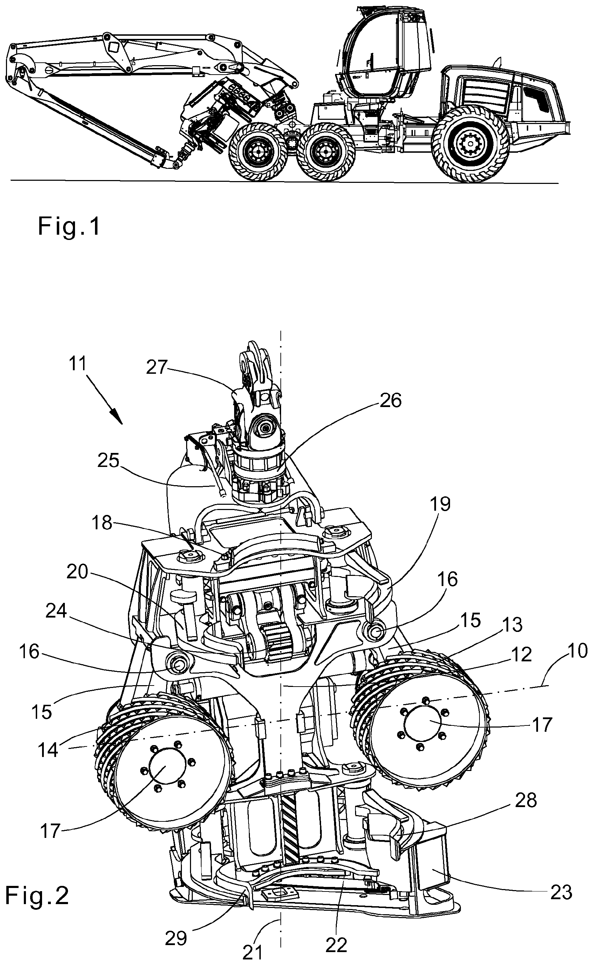

Figure 1 shows a forest machine, in which it is possible to apply a harvester head according to the presented solution. In said harvester head, in turn, it is possible to apply the presented solution relating to a measuring wheel apparatus. The forest machine is a harvester which comprises a boom assembly whose end is provided with a harvester head for the processing of trunks.

Figure 2 shows a harvester head which is also called apparatus 11 in this description and which is in accordance with the presented solution. The apparatus 11 is suitable for cutting, delimbing and debarking of trunks. The apparatus 11 comprises a frame structure 12 which is placed onto the trunk to be processed and to which the mounting arms 15 of the feed members 13, 14 are coupled by means of joints 16. Furthermore, the frame structure 12 comprises either supporting surfaces or supporting rollers, or both, against which the trunk is pressed. The measuring wheel of the measuring wheel apparatus 24 acts as a supporting roller.

The feed member comprises a roller that is rotatable by a motor 17. The feed members 13, 14 are cylindrical in shape, and their outer jacket is equipped with devices and a pattern for cutting through the bark and for gripping the trunk for feeding. Normally, at least two feed members are provided, one on each side of the tree trunk. The rotating axes of the feed members 13, 14 are oblique, transverse or perpendicular to the longitudinal direction 21. The feed member may also be a crawler.

In an alternative, it is possible to arrange that the mounting arm is mounted on the frame structure by a joint whose swivelling axis is substantially parallel to the longitudinal direction 21. One or more actuators, for example cylinders, are coupled between the mounting arms 15 to take care of the rotational position and the compressive force of the feed members 13 and 14.

The apparatus 11 also comprises a curved grapple member 19 combined with a delimbing blade and having a rotation axis substantially parallel to the longitudinal direction 21. On the opposite side of the trunk, another curved grapple member 20 is provided as a pair to the grapple member 19, also equipped with a delimbing blade.

If necessary, for delimbing the top surface of the trunk, the apparatus also comprises a curved delimbing blade 18 which may also be movable.

The apparatus 11 also comprises a cross-cutting device 22 for cross-cutting the tree trunk. The cross-cutting device 22 is normally a chain saw equipped with a pivotable guide bar. The chain saw is placed in a saw box 23. The cross-cutting device may also be of a so-called guillotine type, or it may comprise clamping jaws.

The frame structure 12 can be rotated 90° to a horizontal position compared to the position shown in Fig. 2, which is effected by joints around a horizontal rotation axis 10. The joints connect the frame structure 12 to a swivelling arm 25 which can be suspended at the end of the boom assembly of the forest machine by means of mounting and rotating devices, for example a rotating device 26 and a support 27.

Furthermore, the apparatus 11 comprises lower grapple members 28 and 29 which are provided with delimbing blades. The apparatus 11 may also be provided with only one or no lower grapple member.

The feed members 13, 14 are placed in the area between the cross-cutting device 22 and the grapple members 19, 20. If grapple members 28 and 29 are provided in the apparatus 11, they are placed in the area between the cross-cutting device 22 and the feed members 13, 14. The measuring wheel apparatus 14 is placed in the frame structure 12 where it is located in the area between the grapple members 19, 20 and the cross-cutting device 22.

The grapple members support the trunk and secure the placement of the trunk against the supporting roller.

The grapple members 19, 20 are used to grip the tree trunk, to support the trunk and to delimb the trunk when the horizontal trunk is fed in the longitudinal direction 21 through the apparatus 11. The function of the feed members 13, 14 is to cut the bark and to feed the trunk forward. The cutting of the bark contributes to the debarking. The trunk moves in its own longitudinal direction which is parallel to the longitudinal direction 21.

In an example, the feed members 13, 14 of said apparatus 11 are also equipped with a pattern which makes the trunk rotate around the longitudinal direction 21, which intensifies the debarking. In another example, the feed members 13, 14 of said apparatus are placed in an oblique position so as to effect rotation of the trunk around the longitudinal direction 21. In a third example, the debarking is finished by the cutting surface in the frame structure 12 of said apparatus, and by its devices and pattern. Said cutting surface is used particularly when the trunk rotates around the longitudinal direction 21. In the apparatus 11, the cutting surface is placed between the cross-cutting device 22 and the feed members 13, 14.

In an example, the harvester head can be provided for debarking only, in which case the apparatus 11 does not comprise a cross-cutting device 22. Furthermore, it is possible that the apparatus 11 does not comprise a swivelling arm 25 but it is permanently horizontal. Thus, the frame structure 12 is suspended at the end of the boom assembly, for example by means of the rotating device 26 and the support 27.

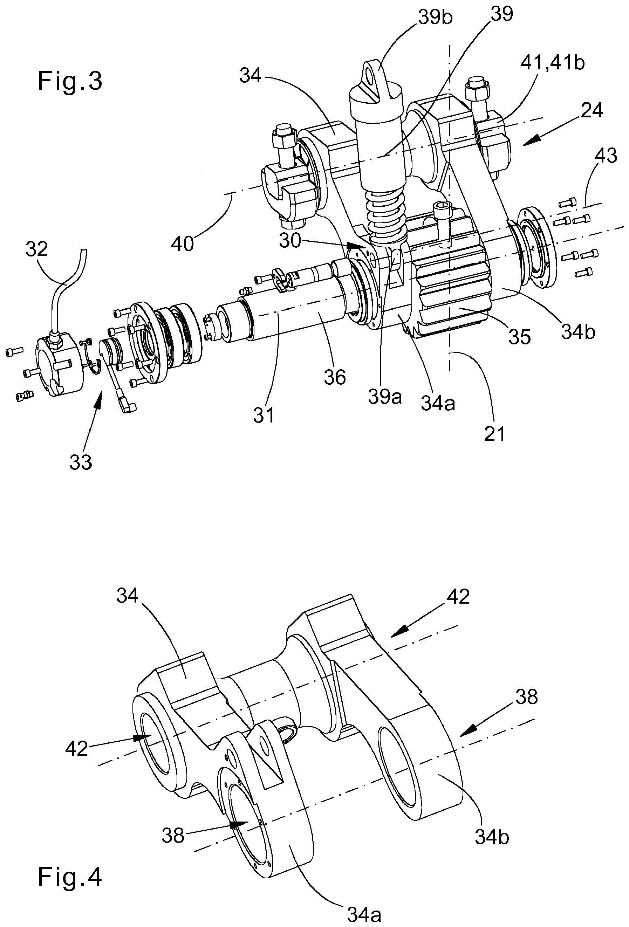

Figure 3 shows a more detailed view of a measuring wheel apparatus 24 according to the presented solution. The measuring wheel apparatus 24 is suitable for use with a harvester head, for example with the above-presented apparatus 11.

The measuring wheel apparatus 24 comprises a frame 34 and a rotating measuring wheel 35 which is coupled to the frame 34 in such a way that the measuring wheel 35 is free to rotate. The measuring wheel 35 is mounted on *e.g.* a shaft 36 whose both ends are mounted on the frame 34 via a bearing. The shaft 36 is parallel to a rotation axis 31, and the shaft 36 rotates together with the measuring wheel 35 around the rotation axis 31. The measuring wheel 35 is placed between the ends of the shaft 36.

As shown in Figs. 3 and 4, the frame 34 comprises two frame protrusions 34a and 34b which extend like a fork to both sides of the measuring wheel 35. The frame 34 is, for example, a shaft-like element, on whose ends the frame protrusions 34a, 34b are mounted. The measuring wheel 35 is supported on both sides to the frame 34 by means of the shaft 36 and the bearings. Each frame protrusion 34a, 34b is provided with an opening 38, in which the ends of the shaft 36 are received. The measuring wheel 35 is placed between the frame protrusions 34a and 34b.

The rotation axis 31 of the measuring wheel 35 is normally placed in such a way that it is perpendicular or extends transversely to the longitudinal direction 21 of the tree trunk. The width of the measuring wheel 35 is configured so that it can be equipped with a desired pattern by means of e.g. elongated blades or cogs which are parallel or oblique to the rotation axis 31.

Preferably, the measuring wheel 35 is replaceable, wherein it is possible to use measuring wheels equipped with various means or patterns. The measuring wheel may also consist of multiple parts and comprise several independent elements equipped with e.g. cogs or corresponding means.

The width of the measuring wheel 35 with respect to the tree trunk is configured to support the moving trunk. The cogs, means or patterns of the measuring wheel are designed to have e.g. such acuteness, shape or depth that they only pierce through the bark of the trunk but do not penetrate deeper into the wood material. The measuring wheel has frictional properties which prevent skidding of the measuring wheel.

The frame 34 can be mounted on the frame of the harvester head by means of a frame joint 37. Said frame joint 37 is spaced from the rotation axis 31, wherein the measuring wheel 35 and the frame 34 are allowed to swing. Said swinging motion allows the movement of the measuring wheel 35 along the varying contour of the tree trunk. The frame 34 swings with respect to the rotation axis 40 of the frame joint 37. The measuring wheel apparatus 34 can be mounted on the frame structure 12 of the apparatus 11 on both sides of the frame 34.

The frame joint 37 comprises a shaft structure 41 which consists of *e.g.* a single element or multiple elements and whose two ends 41a, 41b are mounted on the frame 12 of the harvester head. The frame 34 is placed between the ends 41a and 41b of the shaft structure. The shaft structure 41 allows the rotation of the frame 34 around the rotation axis 40. The ends 41a, 41b are mounted on the frame 34 in a rotatable manner, for example via bearings. The frame 34 comprises an opening 42 for the shaft structure 41. The ends 41a and 41b of the shaft structure are mounted on the frame structure 12 of the harvester head in an unrotatable manner.

According to an alternative example, the shaft structure 41 rotates together with the frame 34 around the rotation axis 40. The ends 41a, 41b of the shaft structure are mounted on the frame structure 12 in a rotatable manner, for example via bearings. The shaft structure 41 is mounted on the frame 34 in a rotatable or unrotatable manner.

The measuring wheel apparatus 24 is mounted on the frame structure in such a way that the measuring wheel 34 can swing to a position in which it is pressed against the trunk held in the apparatus 11. If the trunk has a shape that brings the trunk farther away from the frame structure 12, the swinging motion of the measuring wheel apparatus 24 can be used to keep the measuring wheel 35 pressed against the trunk. The rotation axis 40 of said swinging motion is parallel to the rotation axis 31. The shaft structure 41 of the measuring wheel apparatus 24 can be implemented by means of *e.g.* two shaft journals (ends 41a, 41b). In the frame joint 37, it is also possible to apply other solutions for providing a rigid and strong fastening. One solution is a shaft, e.g. a shaft extending through the frame 34, whose both ends (ends 41a, 41b) are mounted on the frame structure 12. Said shaft is mounted in a rotatable or unrotatable manner on the frame 34 or the frame structure 12.

The rotation axis 40 is perpendicular or extends transversely to the longitudinal direction 21 of the trunk. Consequently, the movement of the frame 34 is radial with respect to the trunk.

The frame 34 of the measuring wheel apparatus also accommodates sensor members 34 for monitoring the rotation of the measuring wheel 35.

As to the sensor members 33, it is possible to apply analogue and digital principles. It is possible to apply e.g. mechanical, electronic, magnetic, inductive, photoelectric, or other sensors for monitoring the rotation of the measuring wheel 35. The sensor members 33 give an analogue or digital measuring signal which is proportional to the position or rotation of the measuring wheel 35, for example the number of rotations or the travel distance of the measuring wheel.

A power device 39 is also connected to the measuring wheel apparatus 24. Preferably, the first end 39a of the power device 39 is mounted on the frame 34 by means of a joint 30. The rotation axis 43 of the joint 30 is parallel to the rotation axis 31.

The power device 39 comprises, for example, a pressure spring or a gas spring, or a combination of these. According to the example of Fig. 3, the power device comprises a cylinder with a variable length, equipped with a returning spring, if necessary.

According to an alternative example, the power device 39 comprises an actuator which is controlled by a pressurized medium and which may also comprise a pressure spring. It is, for example, a hydraulic cylinder.

There is at least one power device 39. According to an example, there are two power devices 39 and they are placed in parallel, next to each other. Preferably, the joint 30 is placed in the protrusion 34a or 34b of the frame 34.

The joint 30 is mounted on the frame 34 either directly or via a bridge. The bridge extends over the measuring wheel 35 and is mounted on the frame 34, on both sides of the measuring wheel 35. Preferably, the bridge is fastened to the protrusions 34a and 34b.

By means of the bridge, a compact structure is provided, if there are e.g. two flexible elements 39 next to each other.

The joint 30 is spaced from the frame joint 37 and its rotation axis 40, wherein the force generated by the power device 39 produces a moment that is capable of rotating the frame 34 around the frame joint 37. The power device 39 is placed in the frame structure 12 in such a way that the power device 39 generates a force that presses the measuring wheel 35 against the tree trunk. The opposite second end 39b of the power device 39 is supported to the frame structure 12 or another corresponding element that provides a sufficient counter force for the force generated by the power device 39. The force generated by the power device 39 pushes the measuring wheel 35 against the tree trunk. The generated force is transmitted via the joint 30 and the frame 34.

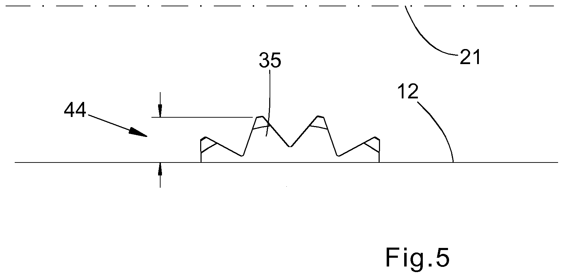

According to the example shown in Fig. 5, the measuring wheel 35 is used as a supporting roller that keeps the moving tree trunk off the frame structure 12. The measuring wheel apparatus 24 is placed in the frame structure 12 in such a way that the swinging motion of the measuring wheel 35 does not allow the measuring wheel 35 to move completely inside the frame structure 12.
The measuring wheel 35 has a so-called supporting position which is shown in the figure and in which it does not move closer to the frame structure 12. The measuring wheel 35 remains elevated with respect to the frame structure 12 when it is in its supporting position. The reach 44 with respect to the frame structure 12, seen transversely to the longitudinal direction 21, is for example 5 mm or more. The measuring wheel 35 can move away from the frame structure 12 in order for it to follow the shapes of the trunk, but the movement of the measuring wheel 35 stops if it arrives at a given reach 44 and said supporting position. A change in the distance greater than said determined reach is allowed. The measuring wheel 35 will rotate further, but it now also provides a supporting force that does not let the trunk fall against the frame structure 12. The supporting force is transmitted by a stopping member.

The swinging motion of the measuring wheel apparatus 24 is limited as desired by providing a stopping member in the frame structure 12, for example a stopper, a barrier or another device for limiting the movement of the frame 34 of the measuring wheel apparatus 24 in such a way that said reach 44 is provided.

Said stopping member can also be adjustable, wherein said reach can be adjusted. In an alternative, the frame structure 12 comprises a stopping member which is placed against the frame 34 or the power device 39 and stops the swinging motion of the frame 34. The stopping member is, for example, a peg, a projection or a stopper fastened to frame structure 12, or another part of the frame structure 12.

In an alternative, the measuring wheel apparatus 24 comprises a stopping member which is placed against the frame 34 or the power device 39 and stops the swinging motion of the frame 34. The stopping member is, for example, a peg, a projection or a stopper fastened to the measuring wheel apparatus 24, or another part of the measuring wheel apparatus 24.

In an example, the internal structure of the power device is constructed in such a way that it stops the movement of the frame 34. The power device is provided with a retainer or a stopping member of its own. In the case of a spring, the spring has a given minimum dimension allowed by the structure. In the case of a cylinder, the cylinder has a given minimum length allowed by the structure.

The measuring wheel apparatus 24 is fitted in the frame structure 12 of the apparatus, or the measuring wheel apparatus 24 can be fitted in it in such a way that the measuring wheel 35 is always spaced by at least the reach 44 from the frame structure 12. In addition to this, the measuring wheel has to be allowed to move away from the frame structure 12 in order to follow the contour of the trunk.

On the basis of measuring signals 32 given by the sensor members 33, it is possible to determine the distance travelled by the measuring wheel 35 along the trunk that has moved past the measuring wheel 35. Said measuring signals 32 can be utilized in the control apparatus of the forest machine which computes lengths of processed trunks and stores and processes length measurement data as desired in various functions.

The actuators of the apparatus 11 of the harvester head are controlled by using a pressurized medium and normally actuators powered by hydraulic fluid which are controlled by the valve control circuit of the harvester head. Debarking has been taken into account in the structure of the jacket of the feed members. The harvester head, in turn, is controlled by the control apparatus of the forest machine, and the operator of the forest machine controls the operation of the forest machine and the harvester head by means of the control apparatus.

The invention is not limited solely to the examples, embodiments and alternatives presented in the drawings or the above description, and they should not be used as limiting examples. Neither should the above-presented drawings be understood in such a way that all the features shown in them would also be in use in the presented solutions. The above presented features can be combined in both the harvester head and the measuring wheel apparatus in such a way that they have the desired functions for performing different tasks. The invention is limited to the extent defined in the appended claims.

## Claims

1. A measuring wheel apparatus (24) which is applicable in a harvester head (11), comprising at least:
- a frame (34),
- a measuring wheel (35) which is mounted on the frame (34) in a rotatable manner and configured to be placed against a tree trunk when the apparatus (24) is mounted on the harvester head (11) and the tree trunk is fed through the harvester head;
- a frame joint (37), via which the frame (34) is configured to be mounted on the harvester head in a swinging manner; and
- a power device (39) configured to swivel the measuring wheel apparatus (24) and to keep the measuring wheel (35) pressed against the tree trunk when the measuring wheel apparatus (24) is mounted on a harvester head (11);
- when the measuring wheel apparatus (24) is mounted on a harvester head (11), the measuring wheel (35) is configured to further comprise a supporting position which supports the tree trunk by providing a supporting force that does not let the trunk fall against a frame structure (12) of the harvester head (11);
**characterized in that**:
- the measuring wheel apparatus (24) comprises a stopping member configured to stop the swinging motion of the measuring wheel apparatus (24) when the measuring wheel (35) assumes the supporting position; and
- the measuring wheel (35) is also equipped with devices for debarking the tree trunk.

2. The apparatus (24) according to claim 1, **characterized in that** the measuring wheel (35) comprises a rotation axis (31), in relation to which the measuring wheel rotates, and the frame (34) comprises a rotation axis (40) in relation to which the frame swings when the apparatus is mounted on the harvester head (11), wherein the rotation axes (31, 40) of the measuring wheel (35) and the frame (34) are parallel to each other.

3. The measuring wheel apparatus (24) according to -claim 1 or 2, **characterized in that** the frame (34) forms a swinging fork, comprising two frame protrusions (34a, 34b), between which said measuring wheel (34) is positioned and mounted.

4. The measuring wheel apparatus (24) according to claim 3, **characterized in that** the apparatus (24) also comprises a shaft (36), via which the measuring wheel is mounted on said two frame protrusions (34a, 34b).

5. The measuring wheel apparatus (24) according to any of the claims 1 to 4, **characterized in that** the apparatus (24) also comprises at least one sensor member (33) arranged to follow the rotation of the measuring wheel (35) and to give a measuring signal (32) relating to its rotation.

6. A harvester head (11) comprising at least:
- a frame structure (12);
- feed members (13, 14), which are provided in the frame structure (12) and feed a tree trunk in the longitudinal direction (21) through the harvester head (11);
- a measuring wheel apparatus (24) according to any of claims 1 to 5, the measuring wheel apparatus (24) being mounted on the frame structure (12) in a swinging manner and comprising a measuring wheel (35) configured to roll along a tree trunk when the tree trunk is fed through the harvester head (11), wherein the power device (39) is configured to swivel the measuring wheel apparatus (24) and to keep the measuring wheel (35) pressed against the tree trunk, wherein the measuring wheel (35) is configured to remain in an elevated position in relation to the frame structure (12) of the harvester head (11).

7. The harvester head (11) according to claim 6, **characterized in that** the harvester head (11) has a longitudinal direction (21), in which direction the tree trunk is fed through the harvester head (11), wherein the rotation axis (40) of the frame (34) of the measuring wheel apparatus (24) is perpendicular or extends transversely in relation to said longitudinal direction (21).

8. The harvester head (11) according to claim 6 or 7 **characterized in that** the power device (39) is a spring, or a cylinder, or a combination of these.

9. The harvester head (11) according to any of the claims 6 to 8, **characterized in that** the feed members (13, 14) are also equipped with devices for debarking the tree.

10. The harvester head (11) according to any of the claims 6 to 9, **characterized in that** the harvester head (11) further comprises:
- a cross-cutting device (22) for cross-cutting a tree trunk; and
- at least two grapple members (19, 20) which are coupled to the frame structure (12) in an articulated manner and are configured to be placed around the tree trunk.

## Patentansprüche

1. Messradvorrichtung (24), die in einem Erntevorsatz (11) anwendbar ist und mindestens Folgendes umfasst:
- einen Rahmen (34),
- ein Messrad (35), das drehbar am Rahmen (34) montiert und dazu ausgelegt ist, an einem Baumstamm platziert zu werden, wenn die Vorrichtung (24) am Erntevorsatz (11) montiert ist und der Baumstamm durch den Erntevorsatz zugeführt wird;
- ein Rahmengelenk (37), über welches der Rahmen (34) dazu ausgelegt ist, verschwenkbar am Erntevorsatz montiert zu werden; und
- eine Antriebsvorrichtung (39), die dazu ausgelegt ist, die Messradvorrichtung (24) zu verschwenken und das Messrad (35) gegen den Baumstamm gedrückt zu halten, wenn die Messradvorrichtung (24) an einem Erntevorsatz (11) montiert ist;
- wobei, wenn die Messradvorrichtung (24) an einem Erntevorsatz (11) montiert ist, das Messrad (35) dazu ausgelegt ist, ferner eine Stützposition zu umfassen, die den Baumstamm abstützt, indem eine Stützkraft vorgesehen wird, die den Baumstamm nicht gegen eine Rahmenstruktur (12) des Erntevorsatzes (11) fallen lässt;
**dadurch gekennzeichnet, dass**:
- die Messradvorrichtung (24) ein Anschlagelement umfasst, das dazu ausgelegt ist, die Schwenkbewegung der Messradvorrichtung (24) zu stoppen, wenn das Messrad (35) die Stützposition einnimmt; und
- das Messrad (35) außerdem mit Vorrichtungen zum Entrinden des Baumstamms ausgestattet ist.

2. Vorrichtung (24) nach Anspruch 1, **dadurch gekennzeichnet, dass** das Messrad (35) eine Drehachse (31) umfasst, bezüglich derer sich das Messrad dreht, und dass der Rahmen (34) eine Drehachse (40) umfasst, bezüglich derer sich der Rahmen verschwenkt, wenn die Vorrichtung am Erntevorsatz (11) montiert ist, wobei die Drehachse (31, 40) des Messrads (35) und des Rahmens (34) parallel zueinander sind.

3. Messradvorrichtung (24) nach Anspruch 1 oder 2, **dadurch gekennzeichnet, dass** der Rahmen (34) eine Schwenkgabel ausbildet, die zwei Rahmenvorsprünge (34a, 34b) umfasst, zwischen denen das Messrad (34) positioniert und montiert ist.

4. Messradanordnung (24) nach Anspruch 3, **dadurch gekennzeichnet, dass** die Vorrichtung (24) außerdem eine Welle (36) umfasst, über welche das Messrad an den zwei Rahmenvorsprüngen (34a, 34b) montiert ist.

5. Messradvorrichtung (24) nach einem der Ansprüche 1 bis 4, **dadurch gekennzeichnet, dass** die Vorrichtung (24) außerdem mindestens ein Sensorelement (33) umfasst, das dazu angeordnet ist, der Drehung des Messrads (35) zu folgen und ein Messsignal (32) in Bezug zu seiner Drehung abzugeben.

6. Erntevorsatz (11), der mindestens Folgendes umfasst:
- eine Rahmenstruktur (12);
- Zuführelemente (13, 14), die in der Rahmenstruktur (12) vorgesehen sind und einen Baumstamm in Längsrichtung (21) durch den Erntevorsatz (11) zuführen;
- eine Messradvorrichtung (24) nach einem der Ansprüche 1 bis 5, wobei die Messradvorrichtung (24) verschwenkbar an der Rahmenstruktur (12) montiert ist und ein Messrad (35) umfasst, das dazu ausgelegt ist, entlang eines Baumstamms zu rollen, wenn der Baumstamm durch den Erntevorsatz (11) zugeführt wird, wobei die Antriebsvorrichtung (39) dazu ausgelegt ist, die Messradvorrichtung (24) zu verschwenken und das Messrad (35) gegen den Baumstamm gedrückt zu halten, wobei das Messrad (35) dazu ausgelegt ist, in Bezug zur Rahmenstruktur (12) des Erntevorsatzes (11) in einer erhöhten Position zu bleiben.

7. Erntevorsatz (11) nach Anspruch 6, **dadurch gekennzeichnet, dass** der Erntevorsatz (11) eine Längsrichtung (21) aufweist, in die der Baumstamm durch den Erntevorsatz (11) zugeführt wird, wobei die Drehachse (40) des Rahmens (34) der Messradvorrichtung (24) senkrecht zur Längsrichtung (21) ist oder sich in Bezug dazu quer erstreckt.

8. Erntevorsatz (11) nach Anspruch 6 oder 7, **dadurch gekennzeichnet, dass** die Antriebsvorrichtung (39) eine Feder oder ein Zylinder oder eine Kombination davon ist.

9. Erntevorsatz (11) nach einem der Ansprüche 6 bis 8, **dadurch gekennzeichnet, dass** die Zuführelemente (13, 14) außerdem mit Vorrichtungen zum Entrinden des Baums ausgestattet sind.

10. Erntevorsatz (11) nach einem der Ansprüche 6 bis 9, **dadurch gekennzeichnet, dass** der Erntevorsatz (11) ferner Folgendes umfasst:
- eine Querschneidevorrichtung (22), um einen Baumstamm quer zu zerschneiden; und
- mindestens zwei Greifelemente (19, 20), die gelenkig mit der Rahmenstruktur (12) gekoppelt und dazu ausgelegt sind, um den Baumstamm platziert zu werden.

## Revendications

1. Appareil à roue de mesure (24) qui est applicable dans une tête d'abattage (11), comprenant au moins :
- un cadre (34),
- une roue de mesure (35) qui est montée sur le cadre (34) d'une manière rotative et configurée pour être placée contre un tronc d'arbre lorsque l'appareil (24) est monté sur la tête d'abattage (11) et le tronc d'arbre est acheminé au travers de la tête d'abattage ;
- une articulation de cadre (37), par le biais de laquelle le cadre (34) est configuré pour être monté sur la tête d'abattage d'une manière oscillante ; et
- un dispositif de puissance (39) configuré pour faire pivoter l'appareil à roue de mesure (24) et pour maintenir la roue de mesure (35) pressée contre le tronc d'arbre lorsque l'appareil à roue de mesure (24) est monté sur une tête d'abattage (11) ;
- lorsque l'appareil à roue de mesure (24) est monté sur une tête d'abattage (11), la roue de mesure (35) étant configurée pour comprendre en outre une position de support qui supporte le tronc d'arbre en fournissant une force de support qui ne laisse pas le tronc tomber contre une structure de cadre (12) de la tête d'abattage (11) ;
**caractérisé en ce que** :
- l'appareil à roue de mesure (24) comprend un élément d'arrêt configuré pour arrêter le mouvement d'oscillation de l'appareil à roue de mesure (24) lorsque la roue de mesure (35) adopte la position de support ; et
- la roue de mesure (35) est également équipée de dispositifs pour écorcer le tronc d'arbre.

2. Appareil (24) selon la revendication 1, **caractérisé en ce que** la roue de mesure (35) comprend un axe de rotation (31), par rapport auquel la roue de mesure tourne, et le cadre (34) comprend un axe de rotation (40) par rapport auquel le cadre oscille lorsque l'appareil est monté sur la tête d'abattage (11), les axes de rotation (31, 40) de la roue de mesure (35) et du cadre (34) étant parallèles l'un à l'autre.

3. Appareil à roue de mesure (24) selon la revendication 1 ou 2, **caractérisé en ce que** le cadre (34) forme une fourche d'oscillation, comprenant deux protubérances de cadre (34a, 34b), entre lesquelles ladite roue de mesure (34) est positionnée et montée.

4. Appareil à roue de mesure (24) selon la revendication 3, **caractérisé en ce que** l'appareil (24) comprend également un arbre (36), par le biais duquel la roue de mesure est montée sur lesdites deux protubérances de cadre (34a, 34b).

5. Appareil à roue de mesure (24) selon l'une quelconque des revendications 1 à 4, **caractérisé en ce que** l'appareil (24) comprend en outre au moins un élément capteur (33) agencé pour suivre la rotation de la roue de mesure (35) et pour donner un signal de mesure (32) relatif à sa rotation.

6. Tête d'abattage (11) comprenant au moins :
- une structure de cadre (12) ;
- des éléments d'acheminement (13, 14), qui sont disposés dans la structure de cadre (12) et acheminent un tronc d'arbre dans la direction longitudinale (21) au travers de la tête d'abattage (11) ;
- un appareil à roue de mesure (24) selon l'une quelconque des revendications 1 à 5, l'appareil à roue de mesure (24) étant monté sur la structure de cadre (12) d'une manière oscillante et comprenant une roue de mesure (35) configurée pour rouler le long d'un tronc d'arbre lorsque le tronc d'arbre est acheminé au travers de la tête d'abattage (11), le dispositif de puissance (39) étant configuré pour faire pivoter l'appareil à roue de mesure (24) et pour maintenir la roue de mesure (35) pressée contre le tronc d'arbre, la roue de mesure (35) étant configurée pour rester dans une position élevée par rapport à la structure de cadre (12) de la tête d'abattage (11).

7. Tête d'abattage (11) selon la revendication 6, **caractérisée en ce que** la tête d'abattage (11) a une direction longitudinale (21), dans laquelle direction le tronc d'arbre est acheminé au travers de la tête d'abattage (11), l'axe de rotation (40) du cadre (34) de l'appareil à roue de mesure (24) étant perpendiculaire ou s'étendant transversalement par rapport à ladite direction longitudinale (21).

8. Tête d'abattage (11) selon la revendication 6 ou 7, **caractérisée en ce que** le dispositif de puissance (39) est un ressort, ou un cylindre, ou une combinaison de ceux-ci.

9. Tête d'abattage (11) selon l'une quelconque des revendications 6 à 8, **caractérisée en ce que** les éléments d'acheminement (13, 14) sont également équipés de dispositifs pour écorcer l'arbre.

10. Tête d'abattage (11) selon l'une quelconque des revendications 6 à 9, **caractérisée en ce que** la tête d'abattage (11) comprend en outre :
- un dispositif de coupe transversale (22) pour la coupe transversale d'un tronc d'arbre ; et
- au moins deux éléments grappins (19, 20) qui sont couplés à la structure de cadre (12) d'une manière articulée et sont configurés pour être placés autour du tronc d'arbre.
